(19) Europäisches Patentamt
European Patent Office
Office européen des brevets

(11) **EP 3 156 620 B1**

(12) **EUROPEAN PATENT SPECIFICATION**

(45) Date of publication and mention
of the grant of the patent:
**12.09.2018 Bulletin 2018/37**

(51) Int Cl.:
***G01N 29/024*** (2006.01)     ***G01N 29/22*** (2006.01)
***F01N 3/20*** (2006.01)     ***F01N 11/00*** (2006.01)

(21) Application number: **15189624.8**

(22) Date of filing: **13.10.2015**

(54) **METHOD OF DETERMINING THE CONCENTRATION OF A CHEMICAL AGENT IN A SOLUTION BASED ON A PRESSURE WAVE VELOCITY AND A SYSTEM THEREFOR**

VERFAHREN ZUR BESTIMMUNG DER KONZENTRATION EINES CHEMISCHEN MITTELS IN EINER LÖSUNG BASIEREND AUF DER GESCHWINDIGKEIT EINER DRUCKWELLE UND SYSTEM DAFÜR

PROCÉDÉ DE DÉTERMINATION DE LA CONCENTRATION D'UN AGENT CHIMIQUE DANS UNE SOLUTION BASÉ SUR UNE VÉLOCITÉ D'UNE ONDE DE PRESSION ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2017 Bulletin 2017/16**

(73) Proprietor: **Plastic Omnium Advanced Innovation and Research
1120 Brussels (BE)**

(72) Inventor: **DEDEURWAERDER, Jurgen
B-1731 Relegem (BE)**

(74) Representative: **Remy, Vincent Noel Paul
LLR
11 boulevard de Sébastopol
75001 Paris (FR)**

(56) References cited:
**EP-A1- 2 826 972     EP-A2- 1 283 332**

## Description

## Technical field of the invention

The present invention relates to a method of determining the concentration of a chemical agent in a solution and a system therefor.

## Background of the invention

Legislation on vehicle and truck emissions stipulates, amongst other things, a reduction in the release of nitrogen oxides $NO_x$ into the atmosphere. One known way to achieve this objective is to use the SCR (Selective Catalytic Reduction) process which enables the reduction of nitrogen oxides by injection of a reducing agent, generally ammonia, into the exhaust line.

SCR operation is improved by using chemical agents which are transported and/or stored on vehicles, marine facilities and industrial facilities. For example, "AdBlue" and "DEF" are trade names for a chemical agent corresponding substantially to aqueous urea solution 32.5%. This solution is injected into exhaust gases of modern diesel engines during a post-combustion process for treating engine exhaust gases for reducing a proportion of harmful nitrous oxide (NOx) present in these gases. AdBlue, DEF, "Adblu" is only ever used in conjunction with an SCR. Moreover, vehicles which are equipped with an SCR will carry an AdBlue, DEF or "Adblu" storage tank in addition to a fuel tank. In operation, AdBlue, DEF, or "Adblu" is transferred from the storage tank and injected under pressure into exhaust gases where a series of chemical reactions occur.

An important factor in the injection of solutions of such chemical agents into exhaust gases is the concentration of that chemical agent in the solution. Since this concentration is crucial to the efficiency of the SCR process, multiple detection methods are typically required as a check to ensure that the system is operating as required, also to check the plausibility of the data from other detection methods. EP 2 826 972 A1 discloses the determination of urea concentration in an SCR system used for chemically reducing nitrogen oxides. The urea concentration changes the viscosity of the solution and the viscosity is measured via the energy necessary to pump the solution through the system. Additionally, the concentration is determined with an ultrasonic sensor measuring the time of flight of an ultrasonic signal in the urea solution.

DE 19850799A1 discloses a sensor arrangement for detecting physical parameters of fluids, with electroacoustic converters, which generate and detect acoustic surface waves with given wave modes, a measure for physical properties of fluids, in particular, amongst other things the viscosity of the fluids being detectable from its propagation behaviour along a propagation path, characterised in that the sensor arrangement is located on a substrate on which conductor track structures of such a type are arranged, that alongside the viscosity, the temperature and also at least the dielectric constants of the fluid can be detected. It is a disadvantage of this system, that acoustic surface waves must be actively generated in order to measure the properties of the fluid.

There is a need for compact and efficient systems for correctly detecting the concentration of the chemical agent in the injection system, so as so to improve control of the amount of agent to be injected.

## Summary of the invention

It is an object of the present invention to provide a system for correctly detecting the concentration of the chemical agent in the injection system, so as to improve control of the amount of agent to be injected, in particular under the form of a plausibility check on the reading of an existing concentration sensor.

Surprisingly the precision with which propagation times can be measured enables the propagation speed of pressure waves in a hydraulic line to be used to estimate the concentration of a solution of a chemical agent, a variation of ca. 1 ms in a transit time of ca. 30 ms being observed for a variation in concentration of an aqueous solution of urea between 10% and 40% by weight..

The propagation-speed of pressure waves (and accoustics) in a hydraulic line depends on the dimensions of the line, upon the Young modulus of the line material and of the ratio bulk modulus/density of the liquid in the line. In a typical SCR application, there is a pump to provide the pressure (typically 5 bar) in the line, an injector to spray the liquid in the exhaust pipe and a hydraulic line connecting both. This hydraulic line has a certain length. At the instance the injector is opened (closed), the pressure decreases (increases) locally. This pressure variation is given in the case of the line being a pipe by the expression:

$$c = \sqrt{\frac{B/\rho}{1 + \dfrac{DB}{eE}}}$$

where c is the speed of pressure propagation of the acoustic wave travelling backwards in the line material as a result of the opening of the valve, $B$ is the bulk modulus of the liquid, $\rho$ is the density of the liquid, $D$ is the external diameter of the pipe, $e$ is the thickness of the pipe and $E$ is the Young's modulus of the pipe material. This expression reflects propagation through the line by two mechanisms: (i) the propagation of the deformation of the line, which will depend on the diameter, the wall thickness and the Young's modulus of the line, which parameters are in principle known; and (ii) the local compression and expansion of the liquid, which is detemined by two properties: the density and the Bulk modulus. Mechanism (ii) is the dominant mechanism if $(DB)/(eE)$

<< 1. Then determination of the speed of this pressure wave propagation (or the time for this propagation, since the length of the line is known) enables the determination of the Bulk modulus divided by the density according to the approximated equation:

$$c = \sqrt{\frac{B}{\rho}}$$

If mechanism (ii) is not the dominant mechanism this equation does not hold and corrections have to be made. This is in part a function of the diameter and wall-thickness of the pipe, but is mainly determined by the Young's modulus of the wall material.

It is clear from the above that the approximated equation can be rendered applicable by a judicious choice of the material of the pipe, *viz.* by choosing a pipe material with a high Young's modules, such as steel ($E$ = 200 GPa).

The impact of the Young's modulus can be obtained by comparing the estimated wave propagation speed of different liquids through steel and PVC piping: the wave propagation speed in glycerol with a bulk modulus of 4.5 GPa is 1890 m/s which is reduced to 1400 m/s in steel piping ($E$ = 200 GPa) and 380 m/s in PVC piping ($E$ = 2.4 - 4.1 GPa); whereas the propagation speed in water with a bulk modulus of 2.2 GPa is 1480 m/s which is reduced to 1100 m/s in steel piping and 300 m/s in PVC piping. These data show that the ability of this method of determining the concentration of a chemical agent to distinguish concentration differences will increase with increasing Young's modulus of the pipe materials with maximum differentiation when the criterion $(DB)/(eE)$ << 1 is fulfilled. However, the accuracy with which the concentration of a chemical agent in a solution needs to be determined is much lower for plausibility purposes (i.e., for checking the plausibility of a value obtained by using another sensor, whether an incorrect measurement or a defective sensor) than for other purposes.

According to a first aspect of the present invention, a method of determining the concentration of a chemical agent in a solution is provided, the method comprising the steps of: providing a pressurized solution of said chemical agent upstream of a dosing unit, for example an injection valve, in a line; changing the opening condition of said dosing unit at a determinable time to to provide a dosing of said solution or a change in the dosing of said solution; determining the time, $t_p$, at which the pressure wave in said line resulting from the pressure drop (due to release of pressure) upon changing the opening condition of said dosing unit is detected at a known distance, d, from said dosing unit; determining the velocity of wave propagation from said time interval $t_p$ - $t_0$ and said known distance, d; and deriving the concentration of said chemical agent from said velocity of wave propagation.

The term "upstream" is used with reference to the normal direction of flow of the fluid when the dosing unit (injector) is active; hence, a position "upstream of a dosing unit" refers to the non-injecting side of the dosing unit. The term "pressurized" refers to the fact that the pressure of the fluid upstream of the dosing unit is sufficiently high to cause fluid to flow into and through the dosing unit when the dosing unit is opened; in a particular embodiment, the fluid may be pressurized up to 3 bar, preferably even up to 5 bar.

In an embodiment, the line comprises a material having a Young's modulus of at least 69 GPa, preferably at least 100 GPa, most preferably at least 200 GPa.

In an embodiment, the concentration of said chemical agent is derived with the assistance of look-up tables or polynomials.

According to a second aspect of the present invention a system is provided for determining the concentration of a chemical agent in a solution, said system comprising a means of pressurizing said solution, a line arranged between said means of applying pressure and an dosing unit having different opening conditions, means for detecting a change in pressure at a known distance from said dosing unit, a means of establishing a time difference between a time at which the opening condition of said dosing unit changes and a time at which the pressure wave in said solution resulting therefrom is detected by said means for detecting a change in pressure, and a processing means configured to derive the concentration of said chemical agent from said time difference.

In an embodiment, the means for detecting a change in pressure comprises a pressure sensor such as for example a piezo-electric transducer (e.g., a piezoresistive sensor or a piezoelectric sensor), a capacitive sensor, or an electromagnetic sensor. In another embodiment, the means for pressurizing said solution comprises a pump driven by an electrical current, and said means for detecting a change in pressure comprises a current sensor arranged on said pump.

According to a third aspect of the present invention, the use is provided of the second aspect of the present invention for checking the plausibility of the concentration of the chemical agent in the solution determined by another sensor present in the system.

According to a fourth aspect of the present invention a vehicular selective catalytic reduction assembly is provided, said assembly comprising the system of the second aspect of the present invention.

According to a fifth aspect of the present invention, a motor vehicle is provided comprising the system of the second aspect of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Figure 1 shows a simulated plot of pressure against time for an initial pressure of 5 bar for urea concentrations varying between 10 and 40% by weight and the injector side (lower set of curves) and at the pump side (upper set of curves).

Figure 2 shows a magnified part of Figure 1 between 99.124 and 99.130 s in which curves A, B, C and D are the characteristics for aqueous solutions with 10% by weight, 20% by weight, 30% by weight and 40% by weight of urea respectively.

Figure 3 illustrates schematically a system for determining the concentration of a chemical agent in a solution, according to a particular embodiment of the present invention.

In the different figures, the same reference signs refer to the same or analogous elements.

**Description of illustrative embodiments**

Definitions

The term "opening condition", as used in disclosing the present invention, means fully open and any definable condition between fully open and completely shut.

The term "line", as used in disclosing the present invention, means any means capable of transporting a solution and includes entities with a circular, elliptical, rectangular or square cross-section.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

It is to be understood that although preferred embodiments, specific constructions and configurations, as well as materials, have been discussed herein for devices according to the present invention, various changes or modifications in form and detail may be made without departing from the scope and spirit of this invention. Steps may be added or deleted to methods described within the scope of the present invention.

While the invention is described hereinafter with reference to an SCR system, it is not limited thereto. In the following description, the reference to urea solutions is exemplary, and not intended to be limiting. The skilled person will appreciate that certain SCR systems operate with ammonia solutions, the concentration of which may also be determined by using embodiments of the present invention.

Method of determining the concentration of a chemical agent in a solution

According to a first aspect of the present invention, a method of determining the concentration of a chemical agent in a solution is provided, the method comprising the steps of: providing a pressurized solution of said chemical agent upstream of a dosing unit in a line; changing the opening condition of said dosing unit at a determinable time $t_0$ to provide a dosing of said solution or a change in the dosing of said solution; determining the time, $t_p$, at which the pressure wave in said line resulting from the pressure drop upon changing the opening condition of said dosing unit is detected, for example by a pressure sensor, at a known distance, d, from said valve; determining the velocity of wave propagation from said time interval $t_p - t_0$ and said known distance, d; and deriving the concentration of said chemical agent from said velocity of wave propagation.

According to a preferred embodiment of the first aspect of the present invention, the means of exactly establishing the time at which the valve opens may be a pressure sensor, the control signal changing the opening condition of the injector or an injector current pattern indicative of the injector opening.

According to another preferred embodiment of the first aspect of the present invention, the pressure drop is detected by means of a pressure sensor in said line.

According to another preferred embodiment of the first aspect of the present invention, is the pressure drop is detected by reference to the motor current information of said pump.

According to another preferred embodiment of the first aspect of the present invention, said chemical agent is urea.

According to another preferred embodiment of the first aspect of the present invention, said solution is an aqueous urea solution.

According to another preferred embodiment of the first aspect of the present invention, said chemical agent is ammonia.

According to another preferred embodiment of the first aspect of the present invention, said solution is an aqueous ammonia solution.

According to another preferred embodiment of the first aspect of the present invention, said line comprises a material having a Young's modulus of at least 69 GPa.

According to another preferred embodiment of the first aspect of the present invention, said line comprises a material having a Young's modulus of at least 100 GPa.

According to another preferred embodiment of the first aspect of the present invention, said line comprises a material having a Young's modulus of at least 200 GPa.

According to another preferred embodiment of the first aspect of the present invention, said method further comprises the step of injecting said solution of said chemical agent into an exhaust line of a vehicle.

According to another preferred embodiment of the first aspect of the present invention, said line comprises a material selected from the group consisting of aluminium, aramid, bronze, brass, titanium, copper, steel, molybdenum and graphene.

According to another preferred embodiment of the first aspect of the present invention, said line comprises a material selected from the group consisting of aramid, bronze, brass, titanium, copper, steel, molybdenum and graphene.

According to another preferred embodiment of the first aspect of the present invention, said line comprises a material selected from the group consisting of steel, molybdenum and graphene.

According to another preferred embodiment of the first aspect of the present invention, said chemical agent is urea as an aqueous solution.

According to another preferred embodiment of the first aspect of the present invention, when said solution of said chemical agent is maintained at a predetermined temperature.

According to another preferred embodiment of the first aspect of the present invention, said method further comprises the step of measuring the temperature of said chemical agent solution and the thereby measured temperature is taken into account in calculating said concentration of said chemical agent in said solution with the assistance of look-up tables.

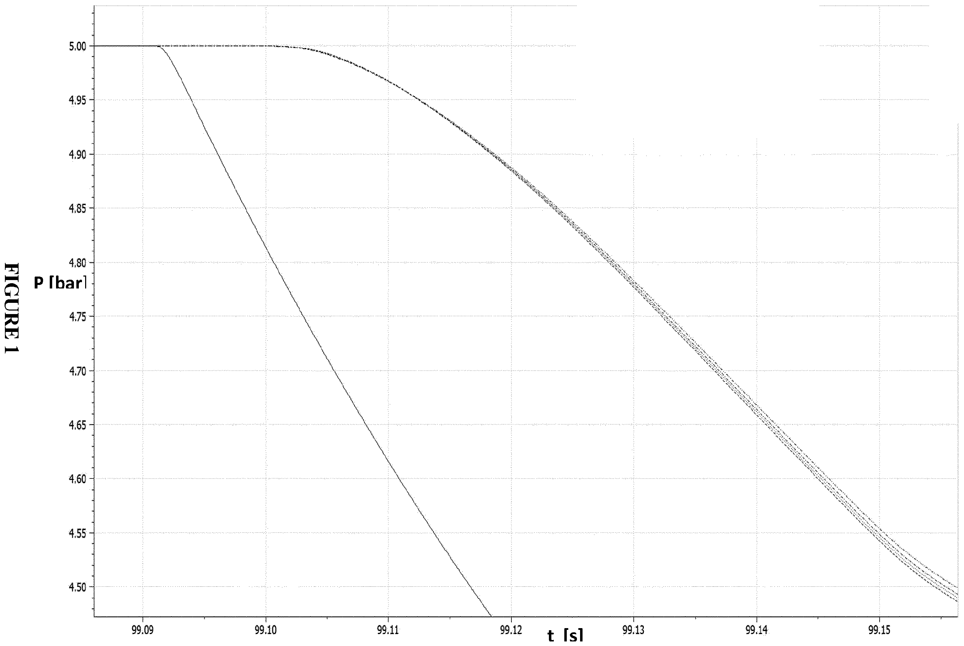

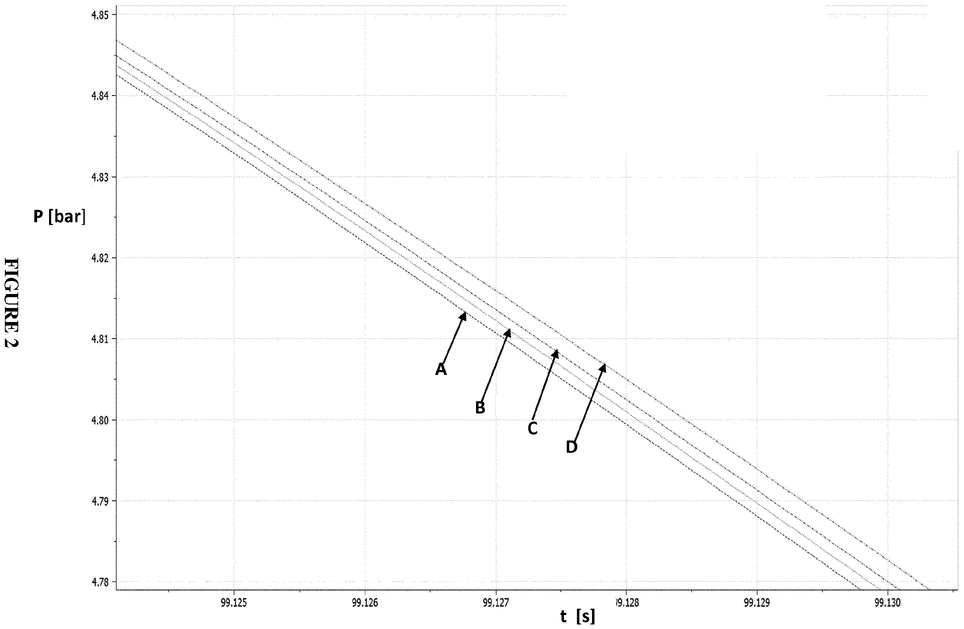

Figure 1 shows a simulated plot of pressure against time for an initial pressure of 5 bar applied by a rotary pump for urea concentrations varying between 10 and 40% by weight and the injector side (lower set of curves) and at the pump side (upper set of curves) and Figure 2 shows a magnified part of Figure 1 between 99.124 and 99.130 s in which curves A, B, C and D are the characteristics for aqueous solutions with 10% by weight, 20% by weight, 30% by weight and 40% by weight of urea respectively at the pump side of the injector.

The set of curves at the pump side exhibits a ca. 1 ms spread in a total wave propagation time of ca. 30.7 ms between concentrations of 10 and 40% by weight.

The arrival time window of 1 ms is fairly small i.e. the spread in propagation wave arrival times for urea concentrations between 10 and 40% by weight, but in terms of the propagation time of about 30.7 ms is about 3% thereof, which taking the accuracy of time determination into account is accurately measureable. What is also clear from the ripple on these simulated plots is the presence of sinusoidal noise resulting from the action of the rotary pump.

Noise can arise from different sources: from the pump applying the pressure, from imperfections in the piping walls, generated by the injection process and from the system. These are definable and hence can be filtered out.

System

According to a second aspect of the present invention a system (1) is provided for determining the concentration of a chemical agent in a solution, said system (1) comprising a means of pressurizing said solution (2), a line (3) arranged between said means of applying pressure (2) and a dosing unit having different opening conditions (4), a means for detecting a change in pressure (5) at a known distance from said dosing unit (4), a means of establishing a time difference (6) between a time at which the opening condition of said dosing unit (4), changes and the time at which the pressure wave in said solution resulting therefrom is detected by said means for detecting a change in pressure (5), and a processing means (7) configured to derive the concentration of said chemical agent from said time difference.

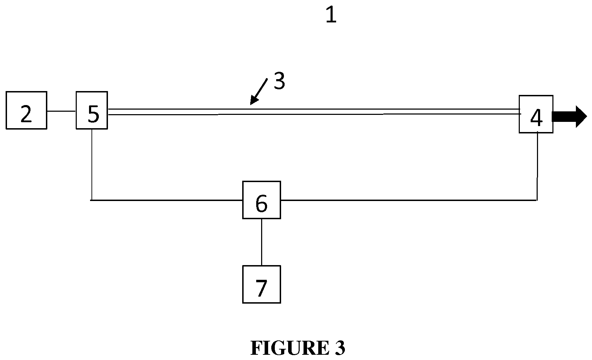

Figure 3 shows a schematic drawing of a system (1), according to the present invention, in which (2) represents a means of applying pressure to the solution, (3) represents a line from which the solution is injected, (4) represents a dosing unit, (5) represents a pressure-wave detection means, (6) represents a means of establishing the time difference $t_p$ - $t_0$ and (7) represents a processing means.

The processing means may be implemented in dedicated hardware (e.g., ASIC), configurable hardware (e.g., FPGA), programmable components (e.g., a DSP or general purpose processor with appropriate software), or any combination thereof. The same component(s) may also include other functions, and may for example form part of a vehicle's ECU.

According to a preferred embodiment of the second aspect of the present invention, said system further comprises a means of calculating said concentration of a chemical agent in solution from the velocity of wave propagation of said pressure wave.

Means for pressurizing a solution include rotary and piston pumps. According to a preferred embodiment of the second aspect of the present invention, said means of pressurizing comprises a rotary pump.

The means of exactly establishing the time at which the valve opens may be a pressure sensor, the control signal changing the opening condition of the injector or an injector current pattern indicative of the injector opening.

According to another preferred embodiment of the second aspect of the present invention, said means for detecting a change in pressure is a pressure sensor.

Any pressure sensor, otherwise known as pressure transducers, pressure transmitters, pressure senders, pressure indicators and piezometers, known to persons skilled in the art may be used. Types include piezoresistive in which strain gauges using bonded or formed strain gauges are used to detect strain due to applied pressure, resistance increasing as pressure deforms the material; capacitive using a diaphragm and pressure cavity to create a variable capacitor to detect strain due to applied pressure, capacitance decreasing as pressure deforms the diaphragm; electromagnetic which measure the displacement of a diaphragm by means of changes in inductance (reluctance), LVDT, Hall Effect, or by eddy current principle; piezoelectric using the piezoelectric effect in certain materials such as quartz to measure the strain upon the sensing mechanism due to pressure.

According to another preferred embodiment of the second aspect of the present invention, the means for pressurizing said solution comprises a pump driven by an electrical current, and said means for detecting a change in pressure (5) comprises a current sensor arranged on said pump.

According to another preferred embodiment of the second aspect of the present invention, said line comprises a material having a Young's modulus of at least 69 GPa.

According to another preferred embodiment of the second aspect of the present invention, said line comprises a material having a Young's modulus of at least 100 GPa.

According to another preferred embodiment of the second aspect of the present invention, said line comprises a material having a Young's modulus of at least 200 GPa.

According to another preferred embodiment of the second aspect of the present invention, said line comprises a material selected from the group consisting of aluminium, aramid, bronze, brass, titanium, copper, steel, molybdenum and graphene.

According to another preferred embodiment of the second aspect of the present invention, said line comprises a material selected from the group consisting of steel, molybdenum and graphene.

According to another preferred embodiment of the second aspect of the present invention, said chemical agent is urea as an aqueous solution.

According to another preferred embodiment of the second aspect of the present invention, said chemical agent is ammonia as an aqueous solution.

According to another preferred embodiment of the second aspect of the present invention, said system further comprises a means of maintaining the temperature of said chemical agent solution at a predetermined temperature.

According to another preferred embodiment of the second aspect of the present invention, a temperature sensor is present in said line.

While the invention has been described hereinabove with reference to specific embodiments, this was done to clarify and not to limit the invention. The skilled person will appreciate that various modifications and different combinations of disclosed features are possible without departing from the scope of the invention. In particular, details that have only been described with reference to the method embodiments may be applied *mutatis mutandis* to the system embodiments with the same technical effects, and vice versa.

## Claims

1. A method of determining the concentration of a chemical agent in a solution the method comprising the steps of:

   providing a pressurized solution of said chemical agent upstream of a dosing unit in a line;
   changing the opening condition of said dosing unit at a determinable time $t_0$ to provide a dosing of said solution or a change in the dosing of said solution;
   determining the time, $t_p$, at which the pressure wave in said line resulting from the pressure drop upon changing the opening condition of said dosing unit is detected in said line at a known distance, d, from said dosing unit;
   determining the velocity of wave propagation from said time interval $t_p - t_0$ and said known distance, d; and
   deriving the concentration of said chemical agent from said velocity of wave propagation.

2. The method according to claim 1, wherein means of exactly establishing the time at which the valve opens may be a pressure sensor, a control signal changing the opening condition of the injector or an injector current pattern indicative of the injector opening.

3. The method according to claim 1 or 2, wherein said chemical agent is urea.

4. The method according to claim 3, wherein said solution is an aqueous urea solution.

5. The method according to any of the preceding claims, further comprising the step of injecting said solution of said chemical agent into an exhaust line of a vehicle.

6. A system (1) for determining the concentration of a chemical agent in a solution, said system comprising a means of pressurizing said solution (2), a line (3) arranged between said means of pressurizing (2) and a dosing unit having different opening conditions (4), means for detecting a change in pressure (5) at a known distance from said dosing unit (4), a means of establishing a time difference (6) between a time at which the opening condition of said dosing unit (4) changes and a time at which the pressure wave in said solution resulting therefrom is detected by said means for detecting a change in pressure (5), and processing means (7) configured to derive the concentration of said chemical agent from said time difference.

7. The system (1) according to claim 6, wherein the means for detecting a change in pressure (5) comprises a pressure sensor.

8. The system (1) according to claim 6, wherein the means for pressurizing said solution comprises a pump driven by an electrical current, and wherein said means for detecting a change in pressure (5) comprises a current sensor arranged on said pump.

9. The system according to any one of claims 6 to 8, wherein said means of applying a pressure comprises a rotary pump.

10. The use of a system according to any one of claims 6 to 9 for checking the plausibility of said concentration of said chemical agent in said solution determined by another sensor.

11. A vehicular selective catalytic reduction assembly comprising a system according to any one of claims 6 to 9.

12. A motor vehicle comprising a system according to any one of claims 6 to 9.

**Patentansprüche**

1. Verfahren zur Bestimmung der Konzentration eines chemischen Mittels in einer Lösung, das Verfahren weist die Schritte auf:

   Bereitstellen einer unter Druck stehenden Lösung des chemischen Mittels in einer Leitung vor einer Dosiereinheit;
   Ändern des Öffnungszustandes der Dosiereinheit zu einem bestimmbaren Zeitpunkt $t_0$, um

eine Dosierung der Lösung oder eine Änderung in der Dosierung der Lösung bereitzustellen;
Bestimmen des Zeitpunktes, $t_p$, zu welchem die Druckwelle in der Leitung, die sich aus dem Druckabfall bei Änderung des Öffnungszustandes der Dosiereinheit ergibt, an einem bekannten Abstand, d, von der Dosiereinheit in der Leitung erfasst wird;
Bestimmen der Geschwindigkeit der Wellenausbreitung aus dem Zeitintervall $t_p - t_0$ und dem bekannten Abstand, d; und
Ableiten der Konzentration des chemischen Mittels aus der Geschwindigkeit der Wellenausbreitung.

2. Verfahren nach Anspruch 1, wobei das Mittel zur genauen Ermittlung des Zeitpunktes, zu welchem das Ventil öffnet, ein Drucksensor, ein Steuersignal, welches den Öffnungszustand des Injektors ändert, oder ein Injektorstrommuster, welches die Injektoröffnung anzeigt, sein kann.

3. Verfahren nach Anspruch 1 oder 2, wobei das chemische Mittel Harnstoff ist.

4. Verfahren nach Anspruch 3, wobei die Lösung eine wässrige Harnstofflösung ist.

5. Verfahren nach einem der vorhergehenden Ansprüche, ferner den Schritt aufweisend:
   Injizieren der Lösung des chemischen Mittels in eine Abgasleitung eines Fahrzeugs.

6. System (1) zur Bestimmung der Konzentration eines chemischen Mittels in einer Lösung, das System aufweisend: ein Mittel zur Druckbeaufschlagung der Lösung (2), eine Leitung (3), die zwischen dem Mittel zur Druckbeaufschlagung (2) und einer Dosiereinheit mit unterschiedlichen Öffnungszuständen (4) angeordnet ist, ein Mittel zum Erfassen einer Druckänderung (5) in einem bekannten Abstand von der Dosiereinheit (4), ein Mittel zum Ermitteln einer Zeitdifferenz (6) zwischen einem Zeitpunkt, zu welchem sich der Öffnungszustand der Dosiereinheit (4) ändert und einem Zeitpunkt, zu welchem die daraus resultierende Druckwelle in der Lösung durch das Mittel zum Erfassen einer Druckänderung (5) erfasst wird, und ein Verarbeitungsmittel (7), das dazu eingerichtet ist, die Konzentration des chemischen Mittels aus der Zeitdifferenz abzuleiten.

7. System (1) nach Anspruch 6, wobei das Mittel zum Erfassen einer Druckänderung (5) einen Drucksensor aufweist.

8. System (1) nach Anspruch 6, wobei das Mittel zur Druckbeaufschlagung der Lösung eine durch einen elektrischen Strom angetriebene Pumpe aufweist, und wobei das Mittel zum Erfassen einer Druckänderung (5) einen an der Pumpe angeordneten Stromsensor aufweist.

9. System nach einem der Ansprüche 6 bis 8, wobei das Mittel zum Beaufschlagen eines Drucks eine Kreiselpumpe aufweist.

10. Verwendung eines Systems nach einem der Ansprüche 6 bis 9 zur Plausibilitätsprüfung der Konzentration des chemischen Mittels in der Lösung, welche durch einen anderen Sensor bestimmt wurde.

11. Selektive katalytische Fahrzeug-Reduktionsanordnung, ein System nach einem der Ansprüche 6 bis 9 aufweisend.

12. Kraftfahrzeug ein System nach einem der Ansprüche 6 bis 9 aufweisend.


**Revendications**

1. Un procédé pour déterminer la concentration d'un agent chimique dans une solution, le procédé comprenant les étapes consistant à :

   fournir une solution sous pression dudit agent chimique en amont d'une unité de dosage dans une conduite ;
   changer l'état d'ouverture de ladite unité de dosage à un moment déterminable $t_0$ pour fournir un dosage de ladite solution ou un changement dans le dosage de ladite solution ;
   déterminer le moment, $t_p$, auquel l'onde de pression dans ladite conduite résultant de la chute de pression lors du changement de l'état d'ouverture de ladite unité de dosage est détectée dans ladite conduite à une distance connue, d, de ladite unité de dosage ;
   déterminer la vitesse de propagation d'onde à partir dudit intervalle de temps $t_p$ - $t_0$ et de ladite distance connue, d ; et
   obtenir la concentration dudit agent chimique à partir de ladite vitesse de propagation d'onde.

2. Le procédé selon la revendication 1, dans lequel des moyens pour établir exactement le moment auquel la valve s'ouvre peuvent être un capteur de pression, un signal de commande changeant l'état d'ouverture de l'injecteur ou une configuration de courant d'injecteur indicatif de l'ouverture de l'injecteur.

3. Le procédé selon la revendication 1 ou la revendication 2, dans lequel ledit agent chimique est de l'urée.

4. Le procédé selon la revendication 3, dans lequel ladite solution est une solution aqueuse d'urée.

5. Le procédé selon l'une quelconque des revendications précédentes, comprenant en outre l'étape consistant à injecter ladite solution dudit agent chimique dans une conduite d'échappement d'un véhicule.

6. Un système (1) pour déterminer la concentration d'un agent chimique dans une solution, ledit système comprenant un moyen de mise sous pression de ladite solution (2), une conduite (3) agencée entre lesdits moyens de mise sous pression (2) et une unité de dosage (4) ayant des états d'ouverture différents, des moyens (5) pour détecter une variation de pression à une distance connue de ladite unité de dosage (4), un moyen pour établir une différence de temps (6) entre le moment auquel l'ouverture de l'unité de dosage (4) change et le moment auquel l'onde de pression dans ladite solution qui en résulte est détectée par lesdits moyens (5) pour détecter une variation de pression, et des moyens de traitement (7) configurés pour obtenir la concentration dudit agent chimique à partir de ladite différence de temps.

7. Le système (1) selon la revendication 6, dans lequel les moyens (5) pour détecter une variation de pression comprennent un capteur de pression.

8. Le système (1) selon la revendication 6, dans lequel les moyens de mise sous pression de ladite solution comprennent une pompe entraînée par un courant électrique, et dans lequel lesdits moyens (5) pour détecter une variation de pression comprennent un capteur de courant disposé sur ladite pompe.

9. Le système selon l'une quelconque des revendications 6 à 8, dans lequel lesdits moyens d'application d'une pression comprennent une pompe rotative.

10. L'utilisation d'un système selon l'une quelconque des revendications 6 à 9 pour vérifier la plausibilité de ladite concentration dudit agent chimique dans ladite solution déterminée par un autre capteur.

11. Un ensemble de réduction catalytique sélective pour un véhicule comprenant un système selon l'une quelconque des revendications 6 à 9.

12. Un véhicule automobile comprenant un système selon l'une quelconque des revendications 6 à 9.

**FIGURE 1**

**FIGURE 2**

1

FIGURE 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2826972 A1

- DE 19850799 A1